# EUROPEAN PATENT SPECIFICATION

(11) **EP 2 887 494 B1**
(45) Date of publication and mention of the grant of the patent: **31.05.2017**
(21) Application number: 15153615.8
(22) Date of filing: 18.07.2007
(51) Int. Cl.: H02J 7/00, A47L 9/28

(54) **Method for charging service robot**
Verfahren zur Ladung eines Dienstroboters
Procédé pour charger un robot de service

(30) Priority: 06.12.2006 KR 20060123050
(43) Date of publication of application: 24.06.2015
(62) Divisional of application: 07290899.9
(73) Proprietor: Samsung Electronics Co., Ltd, Gyeonggi-do 443-742 (KR)
(72) Inventor: Ko, Jang-youn, 405-1904 Gwangju-city (KR); Jeung, Sam-jong, 106-1005 Gwangju-city (KR); Song, Jeong-gon, Gwangju-city (KR); Kim, Myeong-ho, 604-1003 Gwangju-city (KR); Lee, Ju-sang, 202-1005 Gwangju-city (KR); Kim, Kyoung-woung, Gwangju-city (KR); Lee, Hak-bong, Gwangju-city (KR)
(74) Representative: Grünecker Patent- und Rechtsanwälte PartG mbB

(56) References cited:
- GB-A- 2 394 796
- US-A- 5 646 494
- US-A- 5 787 545
- US-A1- 2006 087 273

## Description

### BACKGROUND OF THE INVENTION

### 1. Field of the Invention

The present invention relates to a service robot, and more particularly, to a method for charging a service robot for a vacuum cleaner.

### 2. Description of the Related Art

Generally, service robots are designed to assist people by moving around automatically without user manipulation, and cleaning a surface by drawing in foreign materials such as dust.

Service robots have a distance sensor or a photographing unit, which confirms the presence or absence of obstacles, or the distance of objects such as devices, office equipment or walls in a given area, in order to be able to clean without undesirable collisions or obstruction. An exemplary service robot may include a left driving wheel, a right driving wheel, and a driven wheel, all on the lower part of a cleaner body. Each of the driving wheels is driven in association with a driving motor. The driving motor is controlled by a controller, enabling the cleaner body to change directions.

The robot may have a suction port on a lower part of the body, to draw in foreign substances such as dust from a surface being cleaned. The suction port is subject to a suction force which is generated from a suction motor additionally provided to the cleaner body. The suction port is fluidly connected with a dust-collecting chamber which is provided inside the cleaner body. The in-drawn foreign material is collected and stored in the dust-collecting chamber.

The controller of the service robot checks the battery capacity to determine whether a power source is sufficient for driving the robot. If the controller determines that the battery should be charged, the service robot may communicate with a charging apparatus located at a predetermined position to find and move toward the position of the charging apparatus. A connecting terminal on the service robot may then be connected to a charging terminal on the charging apparatus. In other words, if the charging terminal and connecting terminal are connected to each other, the controller may be in charge mode until the battery power source becomes fully charged. During charging, other operations of the service robot may be halted. For example, the driving mode of the driving wheels and the cleaning mode may be disabled during charging.

When the charging terminal on the charging apparatus loses contact with the connecting terminal on the service robot during charging due to an earthquake, a strong shock on the floor surface, or unintentional contact with a user, or when the power source is interrupted due to power failure during charging or connecting terminals are in contact with each other, the service robot may automatically detect an inductive signal output from the charging apparatus and attempt to dock with the charging apparatus again.

However, when power failure occurs, the power source of the charging apparatus is interrupted or the charging apparatus is out of order, the charging apparatus can not output a charging apparatus recognition signal, so that the service robot can wander from place to place in order to locate the charging apparatus. As a result, the service robot may remain in a halted state because of the battery discharge.

GB 2 394 796 A refers to a docking robot cleaner system with an external charger. Prior to starting a cleaning operation, the cleaner, which is located at the power supply terminal photographs an upward-looking view using the upper camera, calculates and stores location information of the external charging apparatus. When the battery charge has fallen to a predetermined level in use or the cleaning operation is finished, the cleaner determines its current location based on information from a view photographed by the upper camera, calculates a return path from the current location and the stored location information, and returns to the external charging apparatus along the return path. On reaching the power supply terminal, as detected by a collision signal from the bumper, if a power contact signal is not received, the cleaner is rotated through 15 degree for up to six times, testing for a power signal after each rotation. If no signal is received after these attempts, the cleaner is backed away from the terminal, its position and return path are re-determined, and the cleaner is returned to the terminal.

US 5 787 545 A refers to an automatic machine and device for floor dusting. The floor dusting device comprises a self-contained mobile machine provided with two wheels and a suction means, a dust-container, an obstacle avoiding and detection means and an electronic control unit having a microprocessor. The device is also provided with a central device for discharging the dust, said device being stationary and associated to a guiding means enabling the mobile self-contained machine to reach the central dust and discharge device for emptying periodically the dust container. The device is also comprised of a charging unit integrated to the central device to recharge the rechargeable batteries contained in the mobile machine. The microprocessor is associated to an algorithm for avoiding the obstacles and searching the central suction device and the charging unit.

US 2006/087273 A1 refers to robot cleaner system and a method for returning to external recharging apparatus. The robot cleaner system has an external recharging apparatus including a charging stand having a charging terminal, and a plurality of transmission parts for sending signals having different codes and strengths; a robot cleaner including a rechargeable battery, a connection terminal for connection with the charging terminal to supply power to the rechargeable battery, a receiving part for receiving signals from the plurality of transmission parts, and a control part for controlling a movement of the robot cleaner using the signals received by the receiving part, so that the connection terminal is connected to the charging terminal.

US 5 646 494 A refers to a charge induction apparatus of robot cleaner and method thereof. The apparatus includes a control unit for controlling an overall operation, a memory which stores a driving program including structures for various rooms for which cleaning operations may be performed, and a driving unit for moving the robot cleaner in forward, reverse, left and right directions according to control signals of the control unit. A charged level detecting unit detects a charge voltage level of a battery and an electric power source supplier is provided for charging the battery to a predetermined level when the charge voltage level of the battery detected by the charge level detecting unit drops below the predetermined level. An electric power source receiving unit is also provided for electrically connecting the electric power source supplier to the battery so that the power source supplied from the electric power source supplier can be applied to charge the battery.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

It is the object of the present invention to provide an improved method for charging a service robot and a corresponding service robot for preventing the service robot from returning to a charging mode when supply of electricity fails.

This object is solved by the subject matter of the independent claims.

Preferred embodiments are defined by the dependent claims.

According to an aspect of the present invention, there is provided a method for charging a service robot, which prevents the service robot from return to a charging mode when supply of electricity fails, the power source of a charging apparatus is blocked, or a user intentionally interrupts the charging process.

According to an aspect of the present invention, there is provided a method for charging a service robot, the method comprising: (a) docking an input terminal of the service robot with an output terminal of a charging apparatus , if an available battery power source falls below a predetermined level; (b) checking whether a predetermined charging voltage is input to the input terminal of the service robot; (c) determining whether power failure has occurred or the charging apparatus is out of order, if the charging voltage is not input in step (b); and (d) interrupting charging of the battery, if it is determined that power failure has occurred or the charging apparatus is out of order.
Step (c) may comprise determining that power failure has occurred or the charging apparatus is out of order, if an inductive signal is not output from the charging apparatus.
Step (c) may further comprise returning to step (a), if the inductive signal is output from the charging apparatus.
Step (c) may comprise (c-1) moving the service robot forward toward the output terminal using a predetermined pressing force; and (c-2) determining that power failure has occurred or the charging apparatus is out of order, if the charging voltage is not input to the input terminal.
Step (c-1) may be repeated twice or more.
Step (c-2) may further comprise returning to step (b), if the charging voltage is input to the input terminal.

According to another aspect of the prevent invention, there is provided a method for charging a service robot, the method comprising (a) docking an input terminal of the service robot with an output terminal of a charging apparatus, if an available battery power source falls below a predetermined level; (b) checking whether a predetermined charging voltage is input to the input terminal of the service robot; (c) determining whether a user has lifted the service robot from the ground, if the predetermined voltage is not input in step (b); and (d) interrupting charging of the battery if it is determined that a user has lifted the service robot from the ground, and returning to step (a) if it is determined that a user has not lifted the service robot from the ground.
Step (c) may comprise determining that a distance between the service robot and the floor surface exceeds a predetermined distance, using a floor detection sensor placed on the service robot.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a perspective view illustrating a service robot for explanation of a method for charging a service robot according to an exemplary embodiment of the present invention;
FIG. 2 is a block diagram illustrating a charging apparatus and the service robot of FIG. 1;
FIG. 3 is a schematic side view of a service robot for explanation of the charging state of the service robot illustrated in FIG. 1;
FIG. 4 is a flowchart explaining a method for charging a service robot according to an exemplary embodiment of the present invention;
FIG. 5 is a flowchart explaining a method for charging a service robot according to another exemplary embodiment of the present invention;
FIG. 6 is a flowchart explaining a method for charging a service robot according to still another exemplary embodiment of the present invention; and
FIG. 7 is a schematic side view illustrating the state in which a service robot is lifted from the ground.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

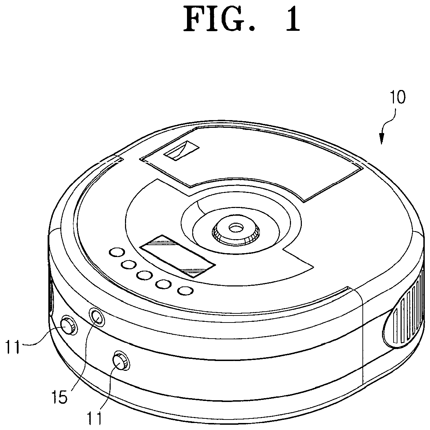

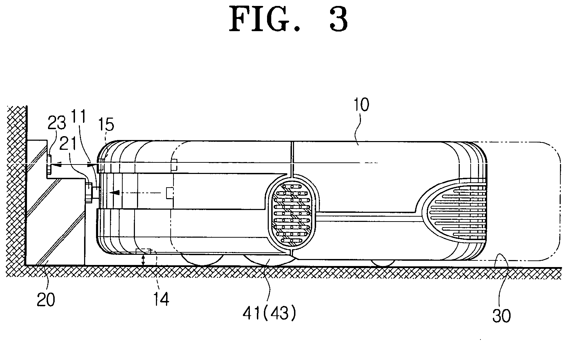

A service robot 10 and a charging apparatus 20 will be described with reference to FIGS. 1 and 3.

FIG. 1 shows the exterior of the service robot. In FIG. 1, the service robot 10 includes connecting terminals 11 corresponding to a charging terminal 21 of the charging apparatus 20 (referring to FIG. 3). A pair of connecting terminals 11 are exposed externally.

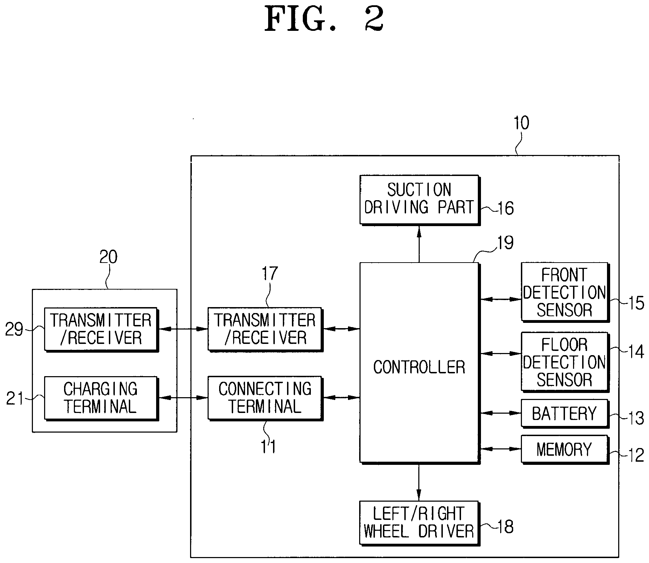

FIG. 2 is a block diagram of the service robot of FIG. 1. As shown in FIG. 2, the service robot 10 includes a memory 12, a battery 13, a floor detection sensor 14, a front detection sensor 15, a suction driving part 16, a transmitter/receiver 17, a left/right wheel driver 18, and a controller 19. The memory 12 stores various data on such things as cleaning times, areas to be cleaned, cleaning routines, or other information. This data is useful for the controller 19 to control the service robot 10 automatically.

The battery 13 provides a driving power source and a certain amount of power source in reserve. Accordingly, the controller 19 frequently checks the capacity of the battery 13 to determine whether the battery 13 should be charged, and to control such that a preset charging mode is used.

The floor detection sensor 14 is provided on a lower part of the service robot 10 and may be configured to face a floor surface 30 (referring to FIG. 3). The floor detection sensor 14 may measure the distance from the floor surface 30, and may be a light emitting and receiving sensor.

The front detection sensor 15 is provided at a side of the service robot 10, and may be installed on the front of the service robot 10 in which the connecting terminals 11 are located. The front detection sensor 15 is used for detecting an obstacle or walls placed in front of or in a traveling direction of the service robot 10, and measuring the distance to the obstacle or walls. The front detection sensor 15 may be a light emitting and receiving sensor.

Signals detected in the sensors 14 and 15 as described above are transmitted to the controller 19. The controller 19 compares the received signals to reference data stored in the memory 12 to obtain information on the state and the position of the service robot 10, and then controls the service robot 10 using the obtained information.

The suction driving part 16 provides a suction force for cleaning the floor surface 30 of the area to be cleaned. Additionally, the suction driving part 16 may include a dust collecting motor.

The transmitter/receiver 17 may be used in order to locate the charging apparatus 20 by communicating with a transmitter/receiver 29 provided on the charging apparatus 20. Additionally, the transmitter/receiver 17 may transmit and/or receive signals to and/or from a remote controller operated by a user. Accordingly, the service robot 10 can be remotely controlled.

The left/right wheel driver 18 selectively drives left and right driving wheels 41 and 43 installed on the lower part of the service robot 10 under the control of the controller 19. The left/right wheel driver 18 may comprise stepping motors connected to the left and right driving wheels 41 and 43, respectively.

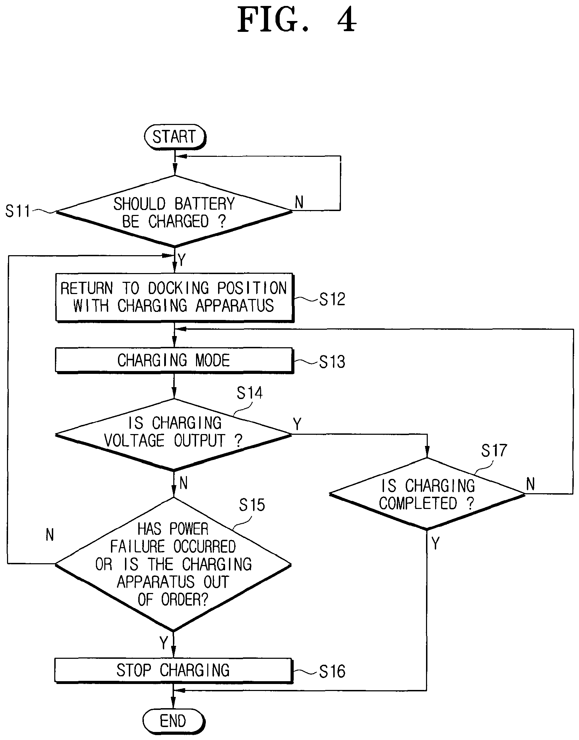

Hereinafter, a method for charging the service robot 10 constructed as described above, according to an exemplary embodiment of the present invention will be described with reference to FIG. 4.

The controller 19 checks the power source capacity of the battery 13 whenever the service robot 10 travels or waits for cleaning, and determines whether the battery 13 should be charged (S11). If it is determined that the battery 13 should be charged, the controller 19 may return the service robot 10 to the docking position, as shown in FIG. 3 (S12). In operation S11, the service robot 10 may locate the charging apparatus 20 by signal exchange between the transmitter/receivers 17 and 29.

If the service robot 10 is returned to the docking position and the connecting terminals 11 are connected to the charging terminal 21, the charging mode may be performed to charge the battery (S13).

The controller 19 checks whether a predetermined charging voltage is applied to the connecting terminals 11 through the charging terminal 21 while charging the battery (S14). In the exemplary embodiment of the present invention, the charging voltage may be about 34V. If the charge voltage is applied, the controller 19 may determine whether charging is completed (S17). If charging is not completed, the process may return to operation S13, and if charging is completed, the service robot 10 may be driven to stop the charging.

If the charging voltage is not applied to the connecting terminal 11, the controller 19 may determine whether power failure has occurred or the charging apparatus is out of order (S 15).

If it is determined that power failure has occurred or the charging apparatus is out of order, the controller 19 may stop the attempt to return to the charging state (S16).

Whether power failure has occurred or the charging apparatus is out of order may be determined according to the presence and absence of an inductive signal transmitted from the transmitter/receiver 29 of the charging apparatus 20.

In other words, if the inductive signal of the charging apparatus 20 is present, the controller 19 may determine that power failure does not occur or the charging apparatus is not out of order, and revert the service robot 10 to a docked state with the charging apparatus 20. If the inductive signal of the charging apparatus 20 is not present, the controller 19 may determine that the power failure occurs or the charging apparatus 20 is out of order, and interrupt the attempt to return the service robot 10 to the charging state (S16).

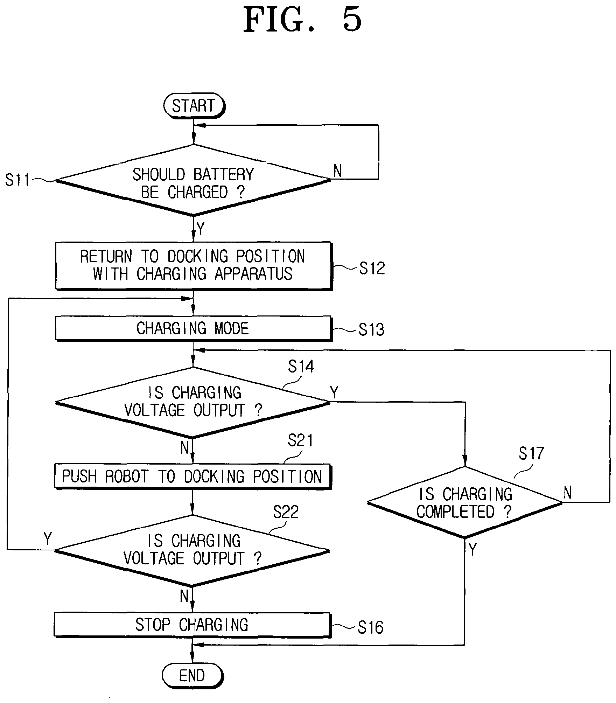

An alternative method for determining whether power failure has occurred or the charging apparatus is out of order is now described with reference to FIG. 5.

This method is provided taking into consideration the situation in which the body of the service robot is slightly twisted due to external shock, which may result in poor contact with the charging apparatus, and thus the predetermined charging voltage is not applied to the connecting terminals 11.

Specifically, the controller 19 pushes the service robot 10 to the front (S21), and then determines whether the charging voltage is input (S22). The front indicates the direction of the charging apparatus, or the direction of the input terminal without change in angles of the wheels. Above operations S21 and S22 may be repeated, for example, twice. If the charging voltage is not input, even through the operations are repeated, the controller 19 may determine that the charging apparatus is out of order, and stop the attempt to return to the charging state (S16). If the charging voltage is input, the process may return to operation S13.

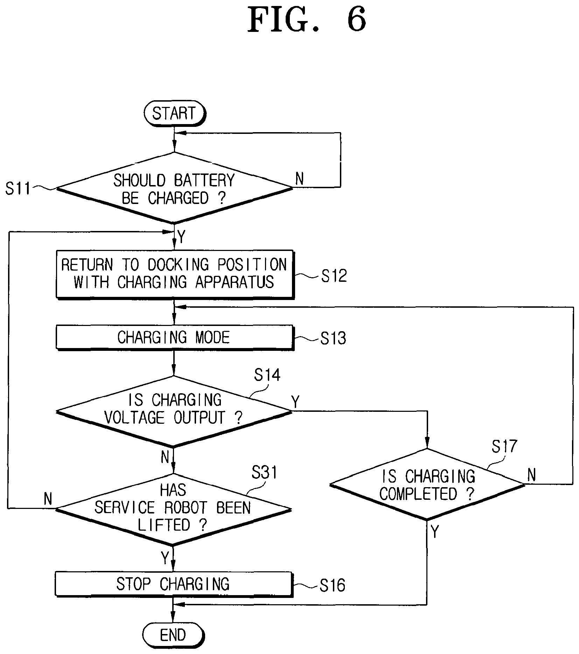

Hereinafter, a method for charging the service robot 10 constructed as described above, according to another exemplary embodiment of the present invention will be described with reference to FIG. 6.

Checking the battery capacity to determine whether the battery needs to be charged, returning the service robot 10 to the docking position to charge the battery, checking whether the predetermined charging voltage is input to the connecting terminals 11 during charging, are performed in the same manner as in above operations S11 to S 14 under the control of the controller 19.

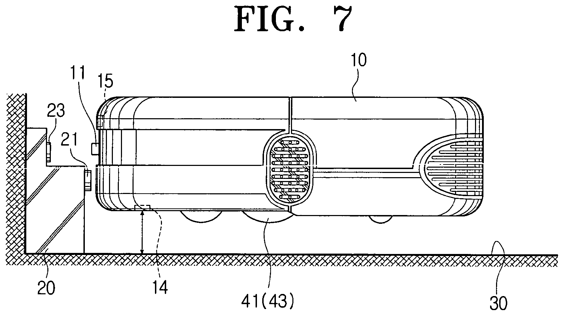

If a user lifts the service robot 10 from the ground, as shown in FIG. 7, the connection between the connecting and charging terminals may be released. Accordingly, the predetermined charging voyage is not applied to the connecting terminals 11. Whether the user has lifted the service robot 10 may be determined by measuring the distance between the service robot 10 and floor surface 30 using the floor detection sensor 14. In other words, if the distance exceeds a predetermined distance from the floor surface based on the location of the wheels of the service robot, it is determined that the user has lifted the service robot 10 (S31). Accordingly, the service robot regards that the user does not wish to charge the battery any more, and stops the attempt to return to the charging state (S16).

In the method for charging the service robot constructed as described above, according to the exemplary embodiments of the present invention it is possible to prevent the continuous attempt to return to the charging state, when power failure occurs, the power supply of the charging apparatus is blocked, or a user intentionally interrupts the charging. Therefore, the discharge of power source may be obstructed.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

**The following is a list of further preferred embodiments of the invention:**
Embodiment 1: A method for charging a service robot, the method comprising:
   (a) docking an input terminal of the service robot with an output terminal of a charging apparatus, if an available battery power source falls below a predetermined level;
   (b) checking whether a predetermined charging voltage is input to the input terminal of the service robot;
   (c) determining whether power failure has occurred or the charging apparatus is out of order, if the charging voltage is not input in step (b); and
   (d) interrupting charging of the battery, if it is determined that power failure has occurred or the charging apparatus is out of order.
Embodiment 2: The method as claimed in embodiment 1, wherein step (c) comprises determining that power failure has occurred or the charging apparatus is out of order, if an inductive signal is not output from the charging apparatus.
Embodiment 3: The method as claimed in embodiment 2, wherein step (c) further comprises returning to step (a), if the inductive signal is output from the charging apparatus.
Embodiment 4: The method as claimed in embodiment 1, wherein step (c) comprises:
   (c-1) moving the service robot forward toward the output terminal using a predetermined pressing force; and
   (c-2) determining that power failure has occurred or the charging apparatus is out of order, if the charging voltage is not input to the input terminal.
Embodiment 5: The method as claimed in embodiment 4, wherein step (c-1) is repeated twice or more.
Embodiment 6: The method as claimed in embodiment 4, wherein step (c-2) further comprises returning to step (b) if the charging voltage is input to the input terminal.
Embodiment 7: A method for charging a service robot, the method comprising:
   (a) docking an input terminal of the service robot with an output terminal of a charging apparatus, if an available battery power source falls below a predetermined level;
   (b) checking whether a predetermined charging voltage is input to the input terminal of the service robot;
   (c) determining whether a user has lifted the service robot from the ground, if the predetermined voltage is not input in step (b); and
   (d) interrupting charging of the battery if it is determined that a user has lifted the service robot from the ground, and returning to step (a) if it is determined that a user has not lifted the service robot from the ground.
Embodiment 8: The method as claimed in embodiment 7, wherein step (c) comprises determining that a distance between the service robot and the floor surface exceeds a predetermined distance, using a floor detection sensor placed on the service robot.

## Claims

1. A method for charging a service robot, the method comprising:
(a) docking (S12) an input terminal (11) of the service robot (10) with an output terminal (21) of a charging apparatus (20) for charging a battery (13) of the service robot, if an available battery power source of the battery (13) falls below a predetermined level;
(b) checking (S14) whether a predetermined charging voltage from the charging apparatus (20) is input to the input terminal (11) of the service robot (10);
(c) if the charging voltage from the charging apparatus (20) is not input to the input terminal (11) of the service robot (10) in step (b) and if an inductive signal is output from the charging apparatus, reattempting to dock the service robot with the charging apparatus for charging the battery; and
(d) if the charging voltage is not input in step (b) and if an inductive signal is not output from the charging apparatus, inhibiting a reattempt to dock the service robot for charging the battery.

2. A service robot comprising:
a body including a suction driving part to provide a suction force for cleaning a floor surface;
a battery (13) contained in the body;
an input terminal coupled to the battery, the input terminal disposed on the body for docking with an output terminal of a charging apparatus (20) for charging of the battery (13);
a left/right wheel driver (18); and
a controller (19) configured to drive the left/right wheel driver (18) for docking the input terminals of the service robot with the output terminal of the charging apparatus (20) for charging (S13) the battery (13) if an available battery power of the battery falls below a predetermined level,
wherein, after docking the service robot to the charging apparatus (20) for charging the battery, if it is determined (S14) that a charging voltage from the charging apparatus is not being input to the input terminal and if it is determined that an inductive signal is being output from the charging apparatus, the controller automatically reattempts docking the service robot with the charging apparatus for charging the battery, and
wherein, after docking the service robot to the charging apparatus for charging the battery, if it is determined that a charging voltage from the charging apparatus is not being input to the input terminal and if it is determined that an inductive signal is not being output from the charging apparatus, the controller (19) stops an attempt to return to the charging state.

3. The service robot as claimed in claim 2,
wherein, when the controller (19) reattempts to dock the service robot with the charging apparatus (20), the controller (19) controls the service robot to move forward toward (S21) the output terminal using a predetermined pressing force, and determines that power failure has occurred or the charging apparatus is out of order, if the charging voltage is not input to the input terminal after the service robot has moved forward toward the output terminal using the predetermined pressing force.

4. A service robot comprising:
a body including a suction driving part to provide a suction force for cleaning a floor surface;
a battery (13) contained in the body;
an input terminal coupled to the battery, the input terminal disposed on the body for docking with an output terminal of a charging apparatus (20) for charging of the battery;
a left/right wheel driver (18); and
a controller (19) configured to drive the left/right wheel driver for docking the input terminals of the service robot with the output terminal of the charging apparatus (20) for charging the battery (13),
wherein, after an initial attempt to dock the service robot to the charging apparatus (20) for charging the battery (13) by physically engaging with the charging apparatus (20), if it is determined (S14) that a charging voltage from the charging apparatus (20) is not being input to the input terminal and if it is determined that an inductive signal is being output from the charging apparatus (20), the controller (18) automatically reattempts docking the service robot with the charging apparatus (20) for charging the battery (13), and
wherein, after the initial attempt to dock by physically engaging with the charging apparatus, if it is determined (S14) that a charging voltage from the charging apparatus is not being input to the input terminal and if it is determined that an inductive signal is not being output from the charging apparatus, the controller (19) stops reattempting to dock the service robot.

5. The service robot as claimed in claim 4, wherein, when the controller (19) reattempts to dock the service robot with the charging apparatus, the controlled (19) controls the left/right wheel driver (18) to move the service robot toward the output terminal using a predetermined pressing force.

## Patentansprüche

1. Verfahren zum Aufladen eines Diensteroboters, wobei das Verfahren umfasst:
(a) Koppeln (812) eines Eingangsanschlusses (11) des Diensteroboters (10) mit einem Ausgangsanschluss (21) einer Ladevorrichtung (20) zum Aufladen einer Batterie (13) des Diensteroboters, sofern eine verfügbare Batteriestromquelle der Batterie (13) unter einen vorbestimmten Wert fällt;
(b) Überprüfen (S14), ob eine vorbestimmte Ladespannung aus der Ladevorrichtung (20) in den Eingangsanschluss (11) des Diensteroboters (10) eingegeben wird;
(c) wenn die Ladespannung aus der Ladevorrichtung (20) in Schritt (b) nicht in den Eingangsanschluss (11) des Diensteroboters (10) eingegeben wird und wenn ein induktives Signal aus der Ladevorrichtung ausgegeben wird, erneutes Versuchen, den Diensteroboter mit der Ladevorrichtung zum Aufladen der Batterie zu koppeln; und
(d) Wenn die Ladespannung nicht in Schritt (b) eingegeben wird und wenn ein induktives Signal nicht von der Ladevorrichtung ausgegeben wird, Verhindern des erneuten Versuchens den Diensteroboter zum Aufladen der Batterie zu koppeln.

2. Diensteroboter, umfassend:
einen Körper mit einem Saugantriebsteil, um eine Saugkraft zum Reinigen einer Bodenoberfläche bereitzustellen;
eine in dem Körper enthaltene Batterie (13);
einen Eingangsanschluss, der mit der Batterie verbunden ist, wobei der Eingangsanschluss an dem Körper zum Koppeln mit einem Ausgangsanschluss einer Ladevorrichtung (20) zum Aufladen der Batterie (13) angeordnet ist;
einen linken/rechten Radantrieb (18); und
eine Steuereinheit (19), die dazu eingerichtet ist, den linken/rechten Radantrieb (18) zum Koppeln der Eingangsanschlüsse des Diensteroboters mit dem Ausgangsanschluss der Ladevorrichtung (20) zum Aufladen (S13) der Batterie (13) anzutreiben, sofern eine verfügbare Batterieleistung der Batterie einen vorgegebenen Wert unterschreitet,
wobei, wenn nach dem Koppeln des Diensteroboters mit der Ladevorrichtung (20) zum Aufladen der Batterie, bestimmt wird (S14), dass eine Ladespannung aus der Ladevorrichtung nicht in den Eingangsanschluss eingegeben wird, und bestimmt wird, dass ein induktives Signal aus der Ladevorrichtung ausgegeben wird, die Steuereinheit automatisch erneut versucht den Diensteroboter mit der Ladevorrichtung zum Aufladen der Batterie zu koppeln, und,
wenn nach dem Koppeln des Diensteroboters mit der Ladevorrichtung zum Aufladen der Batterie bestimmt wird, dass eine Ladespannung aus der Ladevorrichtung nicht in den Eingangsanschluss eingegeben wird, und bestimmt wird, dass kein induktives Signal aus der Ladevorrichtung ausgegeben wird, die Steuereinheit (19) einen Versuch stoppt, in den Ladezustand zurückzukehren.

3. Diensteroboter nach Anspruch 2, bei dem, wenn die Steuereinheit (19) erneut versucht den Diensteroboter mit der Ladevorrichtung (20) zu koppeln, die Steuereinheit (19) den Diensteroboter derart steuert, dass er sich nach vorne in Richtung zu dem Ausgangsanschluss mit Hilfe einer vorbestimmten Druckkraft bewegt (S21), und bestimmt, dass ein Stromausfall aufgetreten ist oder die Ladevorrichtung eine Fehlfunktion hat, sofern die Ladespannung nicht in den Eingangsanschluss eingegeben wird, nachdem sich der Diensteroboter unter Verwendung der vorbestimmten Druckkraft in Richtung des Ausgangsanschlusses bewegt hat.

4. Diensteroboter, umfassend:
einen Körper mit einem Saugantriebsteil, um eine Saugkraft zum Reinigen einer Bodenoberfläche bereitzustellen;
eine in dem Körper enthaltene Batterie (13);
einen Eingangsanschluss, der mit der Batterie verbunden ist, wobei der Eingangsanschluss an dem Körper zum Koppeln mit einem Ausgangsanschluss einer Ladevorrichtung (20) zum Aufladen der Batterie (13) angeordnet ist;
einen linken/rechten Radantrieb (18); und
eine Steuereinheit (19), die dazu eingerichtet ist, den linken/rechten Radantrieb zum Koppeln der Eingangsanschlüsse des Diensteroboters mit dem Ausgangsanschluss der Ladevorrichtung (20) zum Aufladen der Batterie (13) anzutreiben,
wobei, wenn nach einem anfänglichen Versuch, den Diensteroboter mit der Ladevorrichtung (20) zum Aufladen der Batterie (13) zu koppeln, indem er physikalisch mit der Ladevorrichtung (20) in Eingriff kommt, bestimmt wird (S14), dass eine Ladespannung aus der Ladevorrichtung (20) nicht in den Eingangsanschluss eingegeben wird, und bestimmt wird, dass ein induktives Signal von der Ladevorrichtung (20) ausgegeben wird, die Steuereinheit (18) die Kopplung des Diensteroboters mit der Ladevorrichtung (20) zum Aufladen der Batterie (13) automatisch erneut versucht, und
wenn nach dem anfänglichen Versuch der Kopplung durch physikalischen Eingriff mit der Ladevorrichtung bestimmt wird (S14), dass eine Ladespannung aus der Ladevorrichtung nicht in den Eingangsanschluss eingegeben wird, und bestimmt wird, dass ein induktives Signal nicht aus der Ladevorrichtung ausgegeben wird, die Steuereinheit (19) den Versuch stoppt, den Diensteroboter zu koppeln.

5. Diensteroboter nach Anspruch 4, bei dem, wenn die Steuereinheit (19) erneut versucht, den Diensteroboter mit der Ladevorrichtung zu koppeln, die Steuereinheit (19) den linken/rechten Radantrieb (18) derart steuert, dass der Diensteroboter zu dem Ausgangsanschluss mit Hilfe einer vorbestimmten Druckkraft bewegt wird.

## Revendications

1. Procédé de charge d'un robot de service, le procédé comprenant :
(a) un amarrage (S12) d'un terminal d'entrée (11) du robot de service (10) à un terminal de sortie (21) d'un appareil de chargement (20) pour charger une batterie (13) du robot de service, si une source électrique disponible de la batterie (13) décroît sous un niveau prédéterminé ;
(b) un contrôle (S14) pour savoir si une tension de charge prédéterminée provenant de l'appareil de chargement (20) est introduite dans le terminal d'entrée (11) du robot de service (10) ;
(c) si la tension de charge provenant de l'appareil de chargement (20) n'est pas introduite dans le terminal d'entrée (11) du robot de service (10) à l'étape (b) et si un signal inductif est émis depuis l'appareil de chargement, une nouvelle tentative d'amarrer le robot de service à l'appareil de chargement pour charger la batterie ; et
(d) si la tension de charge n'est pas introduite à l'étape (b) et si aucun signal inductif n'est émis depuis l'appareil de chargement, une inhibition d'une nouvelle tentative d'amarrer le robot de service pour charger la batterie.

2. Un robot de service comprenant :
un corps incluant une partie d'entraînement d'aspiration pour fournir une force d'aspiration pour nettoyer une surface de sol ;
une batterie (13) contenue dans le corps ;
un terminal d'entrée couplé à la batterie, le terminal d'entrée installé sur le corps pour s'amarrer à un terminal de sortie d'un appareil de chargement (20) pour charger la batterie (13) ;
un moteur d'entraînement de roues gauche/droite (18); et
un contrôleur (19) configuré pour piloter le moteur d'entraînement de roues gauche/droite (18) pour amarrer les terminaux d'entrée du robot de service au terminal de sortie de l'appareil de chargement (20) pour charger (S13) la batterie (13) si une source électrique disponible de la batterie décroît sous un niveau prédéterminé,
dans lequel, après amarrage du robot de service à l'appareil de chargement (20) pour charger la batterie, s'il est déterminé (S14) qu'une tension de charge provenant de l'appareil de chargement n'est pas introduite dans le terminal d'entrée et s'il est déterminé qu'un signal inductif est émis depuis l'appareil de chargement, le contrôleur tente automatiquement à nouveau d'amarrer le robot de service à l'appareil de chargement pour charger la batterie, et
dans lequel, après amarrage du robot de service à l'appareil de chargement pour charger la batterie, s'il est déterminé qu'une tension de charge provenant de l'appareil de chargement n'est pas introduite dans le terminal d'entrée et s'il est déterminé qu'un signal inductif n'est pas émis depuis l'appareil de chargement, le contrôleur (19) arrête une tentative de revenir à l'état de chargement.

3. Le robot de service tel que revendiqué à la revendication 2,
dans lequel, lorsque le contrôleur (19) tente à nouveau d'amarrer le robot de service à l'appareil de chargement (20), le contrôleur (19) contrôle le robot de service pour avancer vers (S21) le terminal de sortie en utilisant une force de pression prédéterminée, et détermine qu'une coupure d'alimentation s'est produite ou que l'appareil de chargement est hors service, si la tension de charge n'est pas introduite dans le terminal d'entrée aprés que le robot de service a avancé vers le terminal de sortie en utilisant la force de pression prédéterminée.

4. Un robot de service comprenant :
un corps incluant une partie d'entraînement d'aspiration pour fournir une force d'aspiration pour nettoyer une surface de sol ;
une batterie (13) contenue dans le corps ;
un terminal d'entrée couplé à la batterie, le terminal d'entrée installé sur le corps pour s'amarrer à un terminal de sortie d'un appareil de chargement (20) pour charger la batterie ;
un moteur d'entraînement de roues gauche/droite (18) ; et
un contrôleur (19) configuré pour piloter le moteur d'entraînement de roues gauche/droite pour amarrer les terminaux d'entrée du robot de service au terminal de sortie de l'appareil de chargement (20) pour charger la batterie (13),
dans lequel, après une tentative initiale d'amarrage du robot de service à l'appareil de chargement (20) pour charger la batterie (13) en s'engageant physiquement avec l'appareil de chargement (20), s'il est déterminé (S14) qu'une tension de charge émise depuis l'appareil de chargement (20) n'est pas introduite dans le terminal d'entrée et s'il est déterminé qu'un signal inductif est émis depuis l'appareil de chargement (20), le contrôleur (18) tente automatiquement à nouveau d'amarrer le robot de service à l'appareil de chargement (20) pour charger la batterie (13), et
dans lequel, après la tentative initiale d'amarrage en s'engageant physiquement avec l'appareil de chargement, s'il est déterminé (S14) qu'une tension de charge émise depuis l'appareil de chargement n'est pas introduite dans le terminal d'entrée et s'il est déterminé qu'un signal inductif n'est pas émis depuis l'appareil de chargement, le contrôleur (19) arrête toute nouvelle tentative d'amarrer le robot de service.

5. Le robot de service tel que revendiqué à la revendication 4, dans lequel, lorsque le contrôleur (19) tente à nouveau d'amarrer le robot de service à l'appareil de chargement, le contrôleur (19) contrôle le moteur d'entraînement de roues gauche/droite (18) pour déplacer le robot de service vers le terminal de sortie en utilisant une force de pression prédéterminée.
